# EUROPÄISCHE PATENTSCHRIFT

(11) **EP 4 599 596 B1**
(45) Veröffentlichungstag und Bekanntmachung des Hinweises auf die Patenterteilung: **07.10.2026**
(21) Anmeldenummer: 23755352.4
(22) Anmeldetag: 09.08.2023
(51) Int. Cl.: H04N 23/56, H04N 23/55, B23K 26/03, B23K 26/21

(54) **EREIGNISBASIERTE KAMERA, LASERSTRAHLBEARBEITUNGSANLAGE UND VERWENDUNG DER EREIGNISBASIERTEN KAMERA**
EVENT-BASED CAMERA, LASER BEAM WORKING SYSTEM, AND USE OF THE EVENT-BASED CAMERA
CAMÉRA BASÉE SUR UN ÉVÉNEMENT, SYSTÈME DE TRAVAIL PAR FAISCEAU LASER, ET UTILISATION DE LA CAMÉRA BASÉE SUR UN ÉVÉNEMENT

(30) Priorität: 06.10.2022 DE 102022210543
(43) Veröffentlichungstag der Anmeldung: 13.08.2025
(73) Patentinhaber: Robert Bosch GmbH, 70442 Stuttgart (DE)
(72) Erfinder: BOLEY, Meiko, 71229 Leonberg (DE); NEUMANN, Philip, 30974 Wennigsen (DE)
(86) Internationale Anmeldenummer: PCT/EP2023/072057
(87) Internationale Veröffentlichungsnummer: WO 2024/074237

(56) Entgegenhaltungen:
- WO-A1-2021/246194
- DE-A1- 102020 205 641
- US-B2- 10 909 824

## Beschreibung

### Stand der Technik

Die Erfindung betrifft eine ereignisbasierte Kamera, eine Laserstrahlbearbeitungsanlage und eine Verwendung der ereignisbasierten Kamera.

Aus der DE 10 2019 209 376 A1 eine Vorrichtung zur Überwachung eines Laserbearbeitungsprozesses bekannt. Die Vorrichtung ist eingerichtet, während des Laserbearbeitungsprozesses entstandene Spritzer durch Auswertung von Sensordaten zu detektieren, wobei eine ereignisbasierte Kamera die auszuwertenden Sensordaten während des Laserbearbeitungsprozesses erzeugt. Druckschrift DE102020205641A1 offenbart eine ereignisbasierte Kamera für eine Laserstrahlbearbeitungsanlage, die eine Beleuchtungseinrichtung umfasst. Druckschriften WO2021/246194 A1 und US10909824B2 befassen sich mit der Sensitivitätssteuerung von ereignisbasierten Kameras.

### Offenbarung der Erfindung

### Vorteile der Erfindung

Die erfindungsgemäße ereignisbasierte Kamera zur Erzeugung von Sensordaten, insbesondere für eine Laserstrahlbearbeitungsanlage, umfassend einen Kamerachip und ein Objektiv zum Abbilden eines Objektes in einem Erfassungsbereich der ereignisbasierten Kamera auf den Kamerachip, wobei die ereignisbasierte Kamera eine Beleuchtungseinrichtung umfasst, und wobei die Beleuchtungseinrichtung eingerichtet ist, den Kamerachip mit Licht zu beleuchten, hat demgegenüber den Vorteil, dass die Erkennbarkeit von Ereignisse, insbesondere die Erkennbarkeit von Spritzer und Auswürfen bei einem Laserstrahlbearbeitungsprozess, verbessert ist, da durch die Beleuchtung des Kamerachips der Sensitivitätsbereich der ereignisbasierten Kamera verschoben ist.

Der Erfindung liegt die nachfolgende überraschende Erkenntnis zugrunde. Eine ereignisbasierte Kamera registriert Kontrastveränderungen, welche nach dem Weber-Kontrast spezifiziert werden: ${K}_{Weber} = \frac{{I}_{U} - {I}_{L}}{{I}_{L}}$

Dabei ist *IL* die Grundhelligkeit vor und *IU* die Helligkeit nach der Änderung. Wird ein voreingestellter Kontrastwert *K_{Weber}* überschritten löst die ereignisbasierte Kamera ein Ereignis (sogenanntes Event) aus. Ist die Grundhelligkeit des zu beobachten Objekts niedrig, geht *IL*→*0* und somit geht *K_{Weber}*→ ∞. Daraus folgt, dass die ereignisbasierte Kamera bei niedriger Grundhelligkeit bereits bei kleinen Helligkeitsänderungen ein Ereignis (Event) auslöst. Somit ist die ereignisbasierte Kamera sehr sensitiv, so dass auch Objekte als Sensordaten ausgegeben werden, die nicht beobachtet werden sollen, beispielsweise das bearbeitete Werkstück selbst beim Beobachten von Spritzern beim Laserstrahlschweißen. Die nachfolgend beschriebene Erfindung löst dies durch Verschieben des Sensitivitätsbereichs der ereignisbasierten Kamera, indem durch die Beleuchtung des Kamerachips die Grundbeleuchtung *IL* erhöht wird. Damit wird in besonders vorteilhafter Weise die Erkennbarkeit von Spritzern und/oder Auswürfen beim Laserstrahlschweißen verbessert.

Eine ereignisbasierte Kamera, auch bekannt als neuromorphe Kamera oder dynamischer Vision-Sensor, ist eine Kamera, die auf lokale Helligkeitsänderungen reagiert. In einer ereignisbasierten Kamera arbeitet jeder Pixel unabhängig und asynchron und erzeugt Sensordaten bei auftretenden Helligkeitsänderungen. Die Funktionsweise einer ereignisbasierten Kamera ist ähnlich der Arbeitsweise der menschlichen Retina. Beispielsweise ist die ereignisbasierte Kamera ausgebildet, statt dem unnötigen Übersenden vollständiger Bilder in konstanter Framerate, nur lokale Änderung in Zellen und/oder Pixeln der ereignisbasierten Kamera zu senden, wobei die Änderungen beispielsweise von einer Bewegung wie bei Spritzern herrührt. Daher wird die ereignisbasierte Kamera auch als der Dynamic-Vision-Sensor (DVS) oder ereignisbasierter Sensor oder Event basierter Sensor oder Eventsensor oder event based sensor oder Veränderungssensor bezeichnet. Insbesondere ist die ereignisbasierte Kamera ausgebildet, Veränderungen in den Pixeln und/oder Zellen zu dem Zeitpunkt zu senden, an dem sie auftreten. Dies führt in besonders bevorzugter Weise zu einer zeitlichen Auflösung im Mikrosekundenbereich. Die ereignisbasierte Kamera umfasst eine Zellenmatrix mit Zellen. Insbesondere können die Zellen der Zellenmatrix als Pixel aufgefasst werden. Die ereignisbasierte Kamera ist ausgebildet, Intensitätsänderungen in einer Zelle der Zellenmatrix als Intensitätsdaten zu bestimmen. Insbesondere ist die ereignisbasierte Kamera ausgebildet, die Intensitätsänderungen in einem vorbestimmten Zeitintervall t1 zu detektieren, in dem sie auftreten. Vorzugsweise ergibt sich das Zeitinterwall t1 aus den der ereignisbasierten Kamera detektierten Zeitpunkten einer Intensitätsänderung. Ereignisbasierte Kameras stellen daher eine änderungssensitive Form einer Kamera da, deren Funktionsweise aus der Biologie des menschlichen Auges heraus adaptiert wurde. Die ereignisbasierte Kamera nimmt nicht wie klassische Bildsensoren, wie beispielsweise CMOS-Bildsensoren, in äquidistanten Zeitschritten Bilder auf, sondern misst zeitliche Intensitätsdifferenzen somit an einzelnen Pixelpositionen und sendet nur diese unverzüglich mit Mikrosekundengenauigkeit und Millisekunden-Latenz. Wenn sich die Intensität eines Pixels nicht oder nur geringfügig ändert, wird somit kein Ereignis (Event) ausgelöst und für diesen Pixel keine Daten gesendet. Zusammenfassend weist die ereignisbasierte Kamera eine hohe Dynamik von > 120 dB bei einer hohen zeitlichen Auflösung von etwa 1 µs auf. Ferner weist die ereignisbasierte Kamera eine geringe Latenz von < 100 µs auf. Durch die geringe Datenrate sind die Anforderungen an die Bandbreite, die Speicher und die Computerleistung für die Übertragung, die Speicher und die Nachverarbeitung gering. Zudem zeichnet sich die ereignisbasierte Kamera durch eine kompakte Bauform aus.

Vorteilhaft ist, dass die Beleuchtungseinrichtung eingerichtet ist, den Kamerachip homogen mit dem Licht zu beleuchten, da hierdurch gewährleistet ist, dass der gesamte Kamerachip an jedem Pixel dieselbe Sensitivität aufweist, so dass dasselbe Ereignis an jeder Pixelposition in vergleichbarer Weise registriert wird.

Besonders vorteilhaft ist ferner die Ausführungsform, dass die Beleuchtungseinrichtung innerhalb des Objektivs angeordnet ist. Dies hat den Vorteil einer kompakten Bauform der ereignisbasierten Kamera. Ferner ist die Beleuchtungseinrichtung vor Umwelteinflüssen, beispielsweise Spritzern aus dem Laserbearbeitungsprozess geschützt.

Vorteilhaft ist ferner, dass die Beleuchtungseinrichtung eingerichtet ist, das Licht diffus in das Objektiv abzugeben und/oder dass die ereignisbasierte Kamera einen Diffusor umfasst. Dies trägt zu einer homogenen Beleuchtung des Kamerachips und damit zu einer gleichmäßigen Sensitivität der ereignisbasierten Kamera bei. Vorteilhaft ist dabei, dass der Diffusor vor der Beleuchtungseinrichtung zur Zerstreuung des von der Lichtquelle emittierten Lichts angeordnet ist, insbesondere, dass der Diffusor vor der als Punktlichtquelle und/oder vor der als ringförmige Lichtquelle ausgebildeten Beleuchtungseinrichtung angeordnet ist.

Eine ringförmige Lichtquelle trägt zu einer kleinen Bauform der ereignisbasierten Kamera bei. Ferner hat die ringförmige Lichtquelle den Vorteil, dass die Homogenität der Beleuchtung weiter verbessert wird.

Vorteilhaft ist ferner die Ausführungsform, dass das Objektiv einen Strahlteiler umfasst und der Strahlteiler auf einer optischen Achse der ereignisbasierten Kamera angeordnet ist, wobei die Beleuchtungseinrichtung außerhalb des Objektivs derart angeordnet ist, dass die Beleuchtungseinrichtung den Kamerachip über den Strahlteiler mit dem Licht beleuchtet. Diese Ausführungsform hat den Vorteil, dass Designfreiheiten bei der Ausgestaltung der Beleuchtungseinrichtung bestehen, so dass die Beleuchtungseinrichtung für die Beleuchtung des Kamerachips optimiert werden kann. Dabei ist vorteilhaft, dass zwischen der Beleuchtungseinrichtung und dem Strahlteiler ein Diffusor angeordnet ist, um die Homogenität der Beleuchtung des Kamerachips zu verbessern.

Besonders vorteilhaft ist ferner die Ausführungsform, dass die Beleuchtungseinrichtung außerhalb des Objektivs der ereignisbasierten Kamera derart im Erfassungsbereich der ereignisbasierten Kamera angeordnet ist, dass das von der Beleuchtungseinrichtung abgegebene Licht im Wesentlichen ausschließlich den Kamerachip beleuchtet, da diese Ausführungsform keine Veränderung des Objektivs oder des sonstigen Aufbaus der ereignisbasierten Kamera bedarf. Vielmehr kann die Beleuchtungseinrichtung einfach auf dem Objektiv angebracht werden. Es handelt sich hierbei um eine vorteilhafte Nachrüstlösung. Dabei ist vorteilhaft, dass die ereignisbasierte Kamera eine Abschirmeinrichtung umfasst, wobei die Abschirmeinrichtung zwischen der Beleuchtungseinrichtung und dem abgebildeten Objekt derart angeordnet ist, dass das Objekt von dem von der Beleuchtungseinrichtung abgegebenen Licht abgeschirmt ist.

Vorteilhaft ist ferner, dass die ereignisbasierte Kamera ein optisches Filter umfasst, wobei das optische Filter in einem Strahlengang der ereignisbasierten Kamera, insbesondere im Objektiv, angeordnet ist und/oder wobei eine Durchlasswellenlänge des optischen Filters im Wesentlichen gleich einer Abstrahlwellenlänge des von der Beleuchtungseinrichtung abgestrahlten Lichts ist. Durch das optische Filter wird die Sensitivität der ereignisbasierten Kamera weiter erhöht, da beispielsweise Umgebungslicht herausgefiltert wird.

Die Erfindung umfasst ferner eine Laserstrahlbearbeitungsanlage umfassend die beschriebene ereignisbasierte Kamera zur Überwachung eines Laserstrahlbearbeitungsprozesses. Vorzugsweise umfasst die Laserstrahlbearbeitungsanlage eine Auswerteeinrichtung, wobei die Auswerteeinrichtung eingerichtet ist, mittels den von der ereignisbasierten Kamera erzeugten Sensordaten bei dem Laserstrahlbearbeitungsprozess entstandene Spritzer und/oder Auswürfe zu detektieren.

Ferner umfasst die Erfindung die Verwendung der beschriebenen ereignisbasierten Kamera zur Überwachung eines Laserstrahlbearbeitungsprozesses, insbesondere zur Überwachung eines Laserstrahlschweißprozesses. Ferner umfasst die Erfindung alternativ oder zusätzlich die Verwendung der ereignisbasierten Kamera mit einem Linienlaser. Besonders vorteilhaft ist die Verwendung der beschriebenen Kamera, wenn das Bild zu großen Teilen sehr dunkel ist, beispielsweise durch ein optisches Filter, und zudem helle Objekte beobachtet werden.

Die Verwendung der ereignisbasierten Kamera zur Beobachtung von Spritzern und Auswürfen trägt zur Qualitätssicherung von Laserstrahlbearbeitungsprozessen und Laserstrahlschweißprozessen bei, da damit der Ausschuss minimiert und die Ausbringung von Schlechtteilen verhindert werden kann.

Die beschriebenen Vorteile der ereignisbasierten Kamera gelten im Übrigen entsprechend und besonders für die beschriebene Laserstrahlbearbeitungsanlage und die Verwendung der ereignisbasierten Kamera bei einem Laserstrahlbearbeitungsprozess.

Weitere Vorteile ergeben sich aus der nachfolgenden Beschreibung von Ausführungsbeispielen mit Bezug zu den Figuren und aus den abhängigen Ansprüchen.

### Kurze Beschreibung der Zeichnungen

Ausführungsbeispiele der Erfindung sind in den Zeichnungen anhand mehrerer Figuren dargestellt und in der nachfolgenden Beschreibung näher erläutert.

Es zeigen:
Fig. 1 eine ereignisbasierte Kamera eines ersten Ausführungsbeispiels,
Fig. 2 eine ereignisbasierte Kamera eines zweiten Ausführungsbeispiels,
Fig. 3 eine ereignisbasierte Kamera eines dritten Ausführungsbeispiels,
Fig. 4 eine ereignisbasierte Kamera eines vierten Ausführungsbeispiels
Fig. 5 eine ereignisbasierte Kamera eines fünften Ausführungsbeispiels, und
Fig. 6 eine Laserstrahlbearbeitungsanlage.

### Beschreibung von Ausführungsbeispielen

Nachfolgend wird eine ereignisbasierte Kamera zur Erzeugung von Sensordaten beschrieben. Die ereignisbasierte Kamera umfasst einen Kamerachip und ein Objektiv zum Abbilden eines Objektes in einem Erfassungsbereich der ereignisbasierten Kamera auf den Kamerachip, wobei die ereignisbasierte Kamera eine Beleuchtungseinrichtung umfasst, und wobei die Beleuchtungseinrichtung eingerichtet ist, den Kamerachip mit Licht zu beleuchten. Ferner wird eine Laserstrahlbearbeitungsanlage umfassend die ereignisbasierte Kamera zur Überwachung eines Laserstrahlbearbeitungsprozesses und die Verwendung der ereignisbasierten Kamera zur Überwachung eines Laserstrahlbearbeitungsprozesses, insbesondere zur Überwachung eines Laserstrahlschweißprozesses, beschrieben.

Nachfolgend wird ein Aufbau einer Beleuchtungseinrichtung für eine ereignisbasierte Kamera beschrieben. Dabei beleuchtet die Beleuchtungseinrichtung den Kamerachip und nicht das Objekt im Erfassungsbereich der ereignisbasierten Kamera. Vorzugsweise ist die Beleuchtungseinrichtung im Objektiv integriert. Nachfolgend werden vier bevorzugten Ausführungsbeispiele der Beleuchtungseinrichtung zur Beleuchtung des Kamerachips, deren Anordnung und Integration in der ereignisbasierten Kamera beschrieben. Optional umfasst die ereignisbasierte Kamera ein optisches Filter vor dem Objektiv.

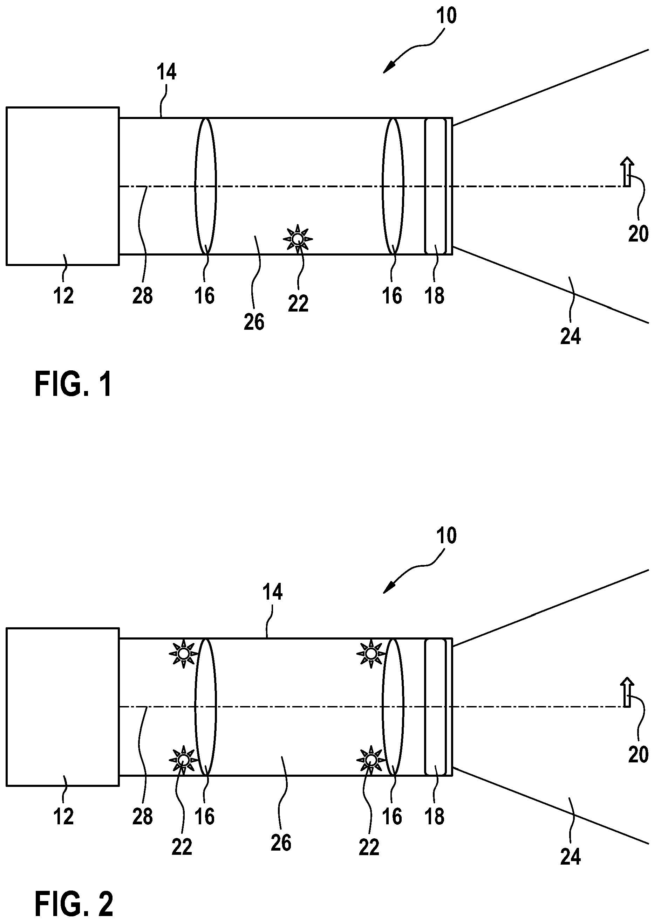

Figur 1 zeigt den Aufbau einer ereignisbasierten Kamera 10 eines ersten Ausführungsbeispiels. Die ereignisbasierte Kamera 10 umfasst einen Kamerachip 12 und ein Objektiv 14 mit einer oder mehreren Linsen 16. Die ereignisbasierte Kamera 10 ist eingerichtet, ein in einem Erfassungsbereich 24 der ereignisbasierten Kamera 10 befindliches Objekt 20 zu erfassen, indem das Objekt 20 durch das Objektiv 14 auf den Kamerachip 12 abgebildet wird. Der Kamerachip 12 der ereignisbasierten Kamera 10 umfasst Pixel, wobei die Pixel eingerichtet sind, unabhängig und/oder zeitlich asynchron von anderen Pixeln des Kamerachips 12 dann Sensordaten zu erzeugen, falls eine von den oder dem jeweiligen Pixel erfasste Helligkeitsänderung größer als ein vorbestimmter Schwellenwert ist. Die Pixel sind insbesondere in einer Matrix angeordnet. Im Ausführungsbeispiel umfasst die ereignisbasierte Kamera 10 ein optisches Filter 18, das im Objektiv 14 nach der letzten Linse 16 des Objektivs 14 auf der optischen Achse 28 angeordnet ist. Ferner umfasst die ereignisbasierte Kamera 10 im ersten Ausführungsbeispiel eine im Objektiv 14 angeordnete Beleuchtungseinrichtung 22 mit einer Punktlichtquelle, die Licht diffus und ungerichtet derart in das Objektiv 14 abgibt, dass der Kamerachip 12 beleuchtet wird, insbesondere im Wesentlichen homogen, insbesondere mit einer einheitlichen Beleuchtungsstärke, beleuchtet wird. Im ersten Ausführungsbeispiel ist die Beleuchtungseinrichtung 22 zwischen zwei Linsen 16 im Objektiv 14, vorzugsweise an einer Innenseite einer Objektivwand des Objektivs 14, angeordnet.

Figur 2 zeigt den Aufbau einer ereignisbasierten Kamera 10 eines zweiten Ausführungsbeispiels. Die ereignisbasierte Kamera 10 umfasst einen Kamerachip 12 und ein Objektiv 14 mit einer oder mehreren Linsen 16. Die ereignisbasierte Kamera 10 ist eingerichtet, ein in einem Erfassungsbereich 24 der ereignisbasierten Kamera 10 befindliches Objekt 20 zu erfassen, indem das Objekt 20 durch das Objektiv 14 auf den Kamerachip 12 abgebildet wird. Der Kamerachip 12 der ereignisbasierten Kamera 10 umfasst Pixel, wobei die Pixel eingerichtet sind, unabhängig und/oder zeitlich asynchron von anderen Pixeln des Kamerachips 12 dann Sensordaten zu erzeugen, falls eine von den oder dem jeweiligen Pixel erfasste Helligkeitsänderung größer als ein vorbestimmter Schwellenwert ist. Die Pixel sind insbesondere in einer Matrix angeordnet. Im Ausführungsbeispiel umfasst die ereignisbasierte Kamera 10 ein optisches Filter 18, das im Objektiv 14 nach der letzten Linse 16 des Objektivs 14 auf der optischen Achse 28 angeordnet ist. Ferner umfasst die ereignisbasierte Kamera 10 im zweiten Ausführungsbeispiel zwei im Objektiv 14 angeordnete Beleuchtungseinrichtungen 22, die als ringförmige Lichtquellen ausgebildet sind und das Licht derart gerichtet auf den Kamerachip 12 abgeben, dass der Kamerachip 12 beleuchtet wird, insbesondere dass der Kamerachip 12 im Wesentlichen homogen, insbesondere mit einer einheitlichen Beleuchtungsstärke, beleuchtet wird. In diesem zweiten Ausführungsbeispiel ist die erste der zwei ringförmigen Lichtquellen der Beleuchtungseinrichtung 22 zwischen dem Kamerachip 12 und einer ersten Linse 16 im Bereich der ersten Linse 16 mit Strahlrichtung zum Kamerachip 12 angeordnet. Eine zweite ringförmige Lichtquelle der Beleuchtungseinrichtung 22 ist vor einer zweiten Linse 16 mit Strahlrichtung zum Kamerachip 12 angeordnet. Die ringförmige Lichtquelle ist derart ausgeführt, dass einzelne punktförmige Lichtquellen äquidistant auf einem Ring angeordnet sind. In einer Variante des zweiten Ausführungsbeispiels umfasst die ereignisbasierte Kamera 10 nur eine Beleuchtungseinrichtung 22 mit einer einzigen ringförmigen Lichtquelle.

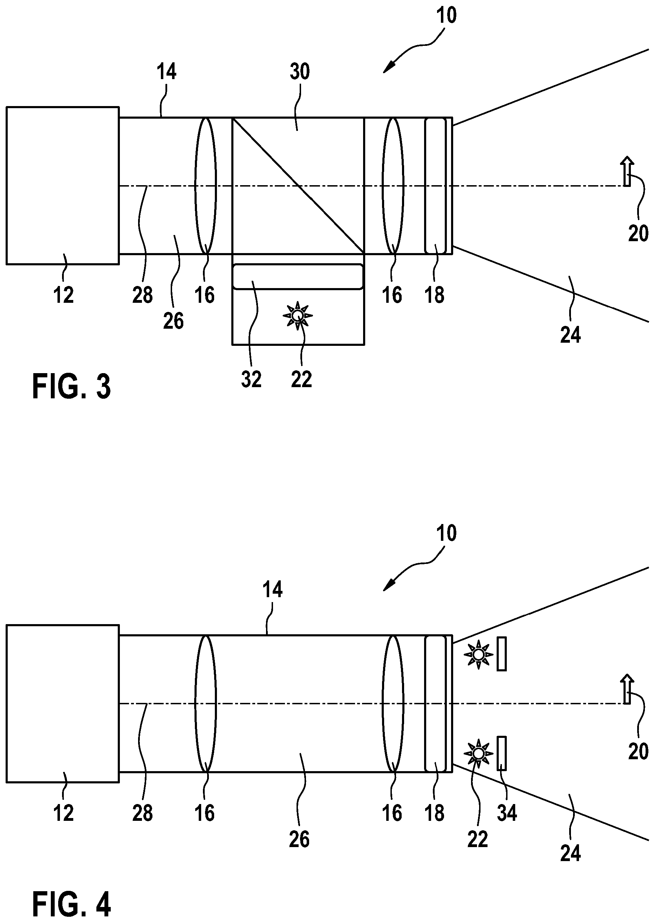

Figur 3 zeigt den Aufbau einer ereignisbasierten Kamera 10 eines dritten Ausführungsbeispiels. Die ereignisbasierte Kamera 10 umfasst einen Kamerachip 12 und ein Objektiv 14 mit einer oder mehreren Linsen 16. Die ereignisbasierte Kamera 10 ist eingerichtet, ein in einem Erfassungsbereich 24 der ereignisbasierten Kamera 10 befindliches Objekt 20 zu erfassen, indem das Objekt 20 durch das Objektiv 14 auf den Kamerachip 12 abgebildet wird. Der Kamerachip 12 der ereignisbasierten Kamera 10 umfasst Pixel, wobei die Pixel eingerichtet sind, unabhängig und/oder zeitlich asynchron von anderen Pixeln des Kamerachips 12 dann Sensordaten zu erzeugen, falls eine von den oder dem jeweiligen Pixel erfasste Helligkeitsänderung größer als ein vorbestimmter Schwellenwert ist. Die Pixel sind insbesondere in einer Matrix angeordnet. Im Ausführungsbeispiel umfasst die ereignisbasierte Kamera 10 ein optisches Filter 18, das im Objektiv 14 nach der letzten Linse 16 des Objektivs 14 auf der optischen Achse 28 angeordnet ist. Ferner umfasst die ereignisbasierte Kamera 10 im dritten Ausführungsbeispiel einen Strahlteiler 30. Der Strahlteiler 30 ist auf der optischen Achse 28 zwischen zwei Linsen 16 angeordnet. Ferner umfasst die ereignisbasierte Kamera 10 des dritten Ausführungsbeispiels eine außerhalb des Objektivs 14 angeordnete Beleuchtungseinrichtung 22. Der Strahlteiler 30 ist eingerichtet, zum einen Licht von dem Objekt 20 im Erfassungsbereich 24 der ereignisbasierten Kamera 10 im Wesentlichen unverändert zum Kamerachip 12 weiterzuleiten und zum anderen Licht von der Beleuchtungseinrichtung 22 derart umzulegen, dass das Licht der Beleuchtungseinrichtung 22 den Kamerachip 12 beleuchtet. Im dritten Ausführungsbeispiel ist der Strahlteiler 30 als prozentual teilender Strahlteiler ausgebildet. In einer Variante ist der Strahlteiler 30 als wellenlängenteilender Strahlteiler ausgebildet. Ferner ist zwischen der Beleuchtungseinrichtung 22 und dem Strahlteiler 30 ein Diffusor 32 angeordnet. Der Diffusor 32 ist vorzugsweise als Streuscheibe zum Zerstreuen des von der Beleuchtungseinrichtung 22 abgegeben Lichts ausgebildet. Die Beleuchtungseinrichtung 22 mit dem Diffusor 32 und dem Strahlteiler 30 sind eingerichtet, den Kamerachip 12 im Wesentlichen homogen, insbesondere mit einer einheitlichen Beleuchtungsstärke, zu beleuchten.

Figur 4 zeigt den Aufbau einer ereignisbasierten Kamera 10 eines vierten Ausführungsbeispiels. Die ereignisbasierte Kamera 10 umfasst einen Kamerachip 12 und ein Objektiv 14 mit einer oder mehreren Linsen 16. Die ereignisbasierte Kamera 10 ist eingerichtet, ein in einem Erfassungsbereich 24 der ereignisbasierten Kamera 10 befindliches Objekt 20 zu erfassen, indem das Objekt 20 durch das Objektiv 14 auf den Kamerachip 12 abgebildet wird. Der Kamerachip 12 der ereignisbasierten Kamera 10 umfasst Pixel, wobei die Pixel eingerichtet sind, unabhängig und/oder zeitlich asynchron von anderen Pixeln des Kamerachips 12 dann Sensordaten zu erzeugen, falls eine von den oder dem jeweiligen Pixel erfasste Helligkeitsänderung größer als ein vorbestimmter Schwellenwert ist. Die Pixel sind insbesondere in einer Matrix angeordnet. Im Ausführungsbeispiel umfasst die ereignisbasierte Kamera 10 ein optisches Filter 18, das im Objektiv 14 nach der letzten Linse 16 des Objektivs 14 auf der optischen Achse 28 angeordnet ist. Ferner umfasst die ereignisbasierte Kamera 10 im vierten Ausführungsbeispiel eine außerhalb der des Objektivs 14 angeordnete Beleuchtungseinrichtung 22. Die Beleuchtungseinrichtung 22 ist derart im Erfassungsbereich 24 der ereignisbasierten Kamera 10 angeordnet, dass das von der Beleuchtungseinrichtung 22 abgegebene Licht im Wesentlichen ausschließlich den Kamerachip 12 beleuchtet. Hierzu umfasst die ereignisbasierte Kamera 10 eine Abschirmeinrichtung 34, wobei die Abschirmeinrichtung 34 derart zwischen der Beleuchtungseinrichtung 22 und dem abgebildeten Objekt 20 angeordnet ist, dass das Objekt 20 von dem von der Beleuchtungseinrichtung 22 abgegebenen Licht abgeschirmt ist. Vorzugsweise ist die Beleuchtungseinrichtung 22 als ringförmige Lichtquelle ausgebildet. Bevorzugt ist ferner, dass die ringförmige Lichtquelle derart ausgeführt ist, dass einzelne punktförmige Lichtquellen äquidistant auf einem Ring angeordnet sind. Ferner ist die Abschirmeinrichtung 34 als Ring ausgebildet derart, dass das von der ringförmigen Lichtquelle abgegeben Licht im Wesentlichen ausschließlich den Kamerachip 12 beleuchtet und im Wesentlichen nicht das Objekt 20 im Erfassungsbereich 24 der ereignisbasierten Kamera 10, so dass der wesentliche Anteil des Lichts in Richtung des Kamerachips 12 abgestrahlt wird. Die Beleuchtungseinrichtung 22 mit der ringförmigen Lichtquelle und der Abschirmeinrichtung 34 sind eingerichtet, den Kamerachip 12 im Wesentlichen homogen, insbesondere mit einer einheitlichen Beleuchtungsstärke, zu beleuchten.

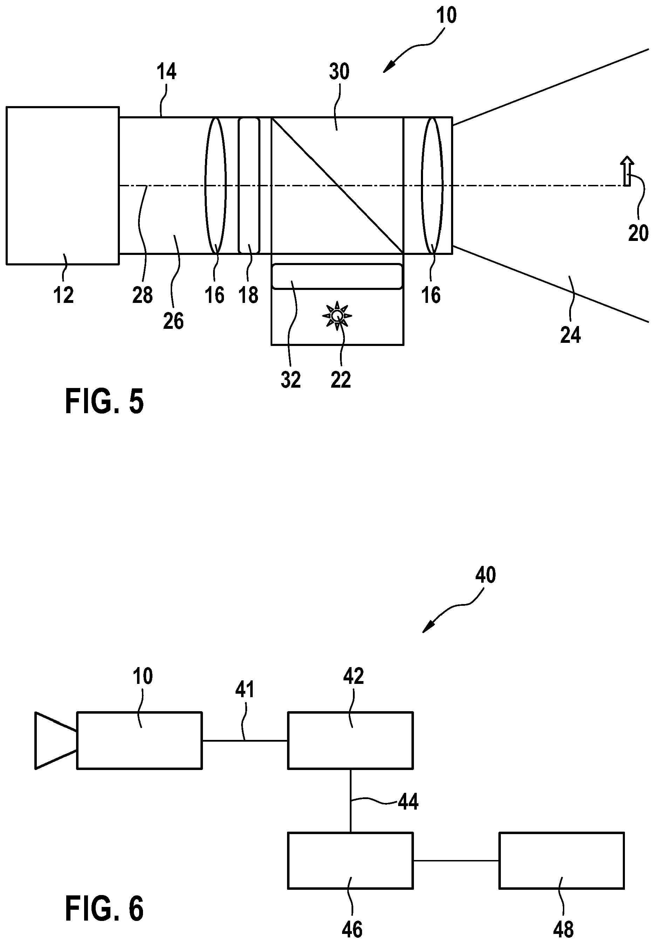

Figur 5 zeigt den Aufbau einer ereignisbasierten Kamera 10 eines fünften Ausführungsbeispiels. Die ereignisbasierte Kamera 10 umfasst einen Kamerachip 12 und ein Objektiv 14 mit zumindest zwei Linsen 16. Die ereignisbasierte Kamera 10 ist eingerichtet, ein in einem Erfassungsbereich 24 der ereignisbasierten Kamera 10 befindliches Objekt 20 zu erfassen, indem das Objekt 20 durch das Objektiv 14 auf den Kamerachip 12 abgebildet wird. Der Kamerachip 12 der ereignisbasierten Kamera 10 umfasst Pixel, wobei die Pixel eingerichtet sind, unabhängig und/oder zeitlich asynchron von anderen Pixeln des Kamerachips 12 dann Sensordaten zu erzeugen, falls eine von den oder dem jeweiligen Pixel erfasste Helligkeitsänderung größer als ein vorbestimmter Schwellenwert ist. Die Pixel sind insbesondere in einer Matrix angeordnet. In diesem Ausführungsbeispiel umfasst die ereignisbasierte Kamera 10 ein optisches Filter 18, das im Objektiv 14 zwischen den zumindest zwei Linsen 16 des Objektivs 14 auf der optischen Achse 28 angeordnet ist. Ferner umfasst die ereignisbasierte Kamera 10 im fünften Ausführungsbeispiel einen Strahlteiler 30. Der Strahlteiler 30 ist auf der optischen Achse 28 zwischen den zumindest zwei Linsen 16 angeordnet. Ferner umfasst die ereignisbasierte Kamera 10 des fünften Ausführungsbeispiels eine außerhalb des Objektivs 14 angeordnete Beleuchtungseinrichtung 22. Der Strahlteiler 30 ist eingerichtet, zum einen Licht von dem Objekt 20 im Erfassungsbereich 24 der ereignisbasierten Kamera 10 im Wesentlichen unverändert zum Kamerachip 12 weiterzuleiten und zum anderen Licht von der Beleuchtungseinrichtung 22 derart umzulegen, dass das Licht der Beleuchtungseinrichtung 22 den Kamerachip 12 beleuchtet. Im fünften Ausführungsbeispiel ist der Strahlteiler 30 als prozentual teilender Strahlteiler ausgebildet. In einer Variante ist der Strahlteiler 30 als wellenlängenteilender Strahlteiler ausgebildet. Ferner ist zwischen der Beleuchtungseinrichtung 22 und dem Strahlteiler 30 ein Diffusor 32 angeordnet. Der Diffusor 32 ist vorzugsweise als Streuscheibe zum Zerstreuen des von der Beleuchtungseinrichtung 22 abgegeben Lichts ausgebildet. Die Beleuchtungseinrichtung 22 mit dem Diffusor 32 und dem Strahlteiler 30 sind eingerichtet, den Kamerachip 12 im Wesentlichen homogen, insbesondere mit einer einheitlichen Beleuchtungsstärke, zu beleuchten. In einer Variante des fünften Ausführungsbeispiels beleuchtet die Beleuchtungseinrichtung 22 den Strahlteiler 30 direkt, ohne dass ein Diffusor 32 vorhanden ist. Insbesondere weist das Objektiv 14 eine Linse 16 vor dem Kamerachip 12 und eine letzte Linse 16 vor dem Objekt 20 auf, wobei das optische Filter 18 zwischen der Linse 16 vor dem Kamerachip 12 und dem Strahlteiler 30 und/oder der Strahlteiler 30 zwischen dem optischen Filter 18 und der letzten Linse 16 angeordnet ist. Vorzugsweise weist das optische Filter 18 eine Durchlasswellenlänge von 840 nm mit einer Halbwertsbreite von 40 nm auf, so dass der Kamerachip 12 eine Beobachtungswellenlänge von 840 nm aufweist. Insbesondere weist die Beleuchtungseinrichtung 22 eine LED auf und/oder strahlt die Beleuchtungseinrichtung 22 Licht mit einer Abstrahlwellenlänge von 840 nm ab.

In einer Variante sind die mit Bezug auf die in den Figuren 1 bis 5 beschriebenen Beleuchtungseinrichtungen in einer ereignisbasierten Kamera kombiniert, so dass beispielsweise die ereignisbasierte Kamera sowohl eine Beleuchtungseinrichtung nach der Figur 3 als auch zusätzlich eine Beleuchtungseinrichtung nach der Figur 4 aufweist.

In einer weiteren Variante ist das optische Filter auf der optischen Achse auf dem Kamerachip und/oder zwischen dem Kamerachip und der ersten Linse und/oder zwischen den Linsen angeordnet. Dabei hängt die Beleuchtungswellenlänge von der Lage des optischen Filters ab, insbesondere ob das optische Filter auf der optischen Achse vor oder hinter der Beleuchtungseinrichtung angeordnet ist. Falls die Beleuchtungseinrichtung vor dem optischen Filter, also zwischen Kamerachip und dem optischen Filter angeordnet ist, kann eine beliebige Beleuchtungswellenlänge gewählt werden. Falls die Beleuchtungseinrichtung nach dem optischen Filter, also zwischen dem optischen Filter und dem Objekt angeordnet ist, wird als Beleuchtungswellenlänge eine Wellenlänge gewählt, die der Filterwellenlänge entspricht.

In den vorstehend beschriebenen Ausführungsbeispielen ist die auf dem Kamerachip durch die Beleuchtungseinrichtung bewirkte Beleuchtungsstärke derart gewählt, dass die Beleuchtungsstärke kleiner als die Leuchtstärke der zu detektierenden Objekte ist derart, dass die zu detektierenden Objekte weiterhin sichtbar sind und/oder dass die Beleuchtungsstärke derart ist, dass Störereignisse, beispielsweise Rauch und/oder die Dampffackel beim Schweißen und/oder die Umgebung und/oder das Rauschen der ereignisbasierten Kamera, nicht als Ereignisse detektiert werden.

Figur 6 zeigt eine Laserstrahlbearbeitungsanlage 40. Die Laserstrahlbearbeitungsanlage 40 umfasst eine mit Bezug auf die Figuren 1 bis 4 beschriebene ereignisbasierte Kamera 10. Die Laserstrahlbearbeitungsanlage 40 ist mittels der ereignisbasierten Kamera 10 eingerichtet, einen Laserstrahlbearbeitungsprozess, insbesondere einen Laserstrahlschweißprozess, zu überwachen. Dabei umfasst die Laserstrahlbearbeitungsanlage 40 eine Auswerteeinrichtung 42, wobei die Auswerteeinrichtung 42 eingerichtet ist, mittels den von der ereignisbasierten Kamera 10 erzeugten Sensordaten 41 bei dem Laserstrahlbearbeitungsprozess entstandene Ereignisse zu detektieren und diese detektierten Ereignisse 44 als Spritzer und/oder Auswürfe zu identifizieren. Ferner umfasst die Laserstrahlbearbeitungsanlage 40 eine Lasersteuereinrichtung 46 und einen Laser 48 zur Bearbeitung eines Werkstückes. Die Laserstrahlbearbeitungsanlage 40 ist eingerichtet, in Abhängigkeit der detektierten Ereignisse 44, insbesondere der identifizierten Spritzer und/oder Auswürfe, Parameter des Lasers 48 über die Lasersteuereinrichtung 46 einzustellen.

## Patentansprüche

1. Ereignisbasierte Kamera (10) zur Erzeugung von Sensordaten (41),
insbesondere für eine Laserstrahlbearbeitungsanlage (40), umfassend einen Kamerachip (12) und ein Objektiv (14) zum Abbilden eines Objektes (20) in einem Erfassungsbereich (24) der ereignisbasierten Kamera (10) auf den Kamerachip (12),
**dadurch gekennzeichnet, dass**
die ereignisbasierte Kamera (10) eine Beleuchtungseinrichtung (22) umfasst, wobei die Beleuchtungseinrichtung (22) eingerichtet ist, den Kamerachip (12) mit Licht zu beleuchten.

2. Ereignisbasierte Kamera (10) nach Anspruch 1,
**dadurch gekennzeichnet, dass**
die Beleuchtungseinrichtung (22) eingerichtet ist, den Kamerachip (12) homogen mit dem Licht zu beleuchten.

3. Ereignisbasierte Kamera (10) nach einem der vorhergehenden Ansprüche,
**dadurch gekennzeichnet, dass**
die Beleuchtungseinrichtung (22) innerhalb des Objektivs (14) angeordnet ist.

4. Ereignisbasierte Kamera (10) nach einem der vorhergehenden Ansprüche,
**dadurch gekennzeichnet, dass**
die Beleuchtungseinrichtung (22) eingerichtet ist, das Licht diffus in das Objektiv (14) abzugeben und/oder dass die ereignisbasierte Kamera (10) einen Diffusor (32) umfasst.

5. Ereignisbasierte Kamera (10) nach einem der vorhergehenden Ansprüche,
**dadurch gekennzeichnet, dass**
die Beleuchtungseinrichtung (22) als Punktlichtquelle und/oder als ringförmige Lichtquelle ausgebildet ist.

6. Ereignisbasierte Kamera (10) nach Anspruch 1 oder 2 oder nach Anspruch 4 oder 5 falls nicht abhängig von Anspruch 3,
**dadurch gekennzeichnet, dass**
das Objektiv (14) einen Strahlteiler (30) umfasst und der Strahlteiler (30) auf einer optischen Achse (28) der ereignisbasierten Kamera (10) angeordnet ist, wobei die Beleuchtungseinrichtung (22) außerhalb des Objektivs (14) derart angeordnet ist, dass die Beleuchtungseinrichtung (22) den Kamerachip (12) über den Strahlteiler (30) mit dem Licht beleuchtet.

7. Ereignisbasierte Kamera (10) nach Anspruch 6 wenn abhängig von Anspruch 4,
**dadurch gekennzeichnet, dass**
der Diffusor (32) zwischen der Beleuchtungseinrichtung (22) und dem Strahlteiler (30) angeordnet ist.

8. Ereignisbasierte Kamera (10) nach Anspruch 1, 2, 6 oder 7 oder nach Anspruch 4 oder 5 falls nicht abhängig von Anspruch 3,
**dadurch gekennzeichnet, dass**
die Beleuchtungseinrichtung (22) außerhalb des Objektivs (14) der ereignisbasierten Kamera (10) derart im Erfassungsbereich (24) der ereignisbasierten Kamera (10) angeordnet ist, dass das von der Beleuchtungseinrichtung (22) abgegebene Licht im Wesentlichen ausschließlich den Kamerachip (12) beleuchtet.

9. Ereignisbasierte Kamera (10) nach Anspruch 8,
**dadurch gekennzeichnet, dass**
zwischen der Beleuchtungseinrichtung (22) und dem abgebildeten Objekt (20) eine Abschirmeinrichtung (34) derart angeordnet ist, dass das Objekt (20) von dem von der Beleuchtungseinrichtung (22) abgegebenen Licht abgeschirmt ist.

10. Ereignisbasierte Kamera (10) nach einem der vorhergehenden Ansprüche,
**dadurch gekennzeichnet, dass**
die ereignisbasierte Kamera (10) ein optisches Filter (18) umfasst, wobei das optische Filter (18) in einem Strahlengang (26) der ereignisbasierten Kamera (10), insbesondere im Objektiv (14), angeordnet ist und/oder wobei eine Durchlasswellenlänge des optischen Filters (18) im Wesentlichen gleich einer Abstrahlwellenlänge des von der Beleuchtungseinrichtung (22) abgestrahlten Lichts ist.

11. Ereignisbasierte Kamera (10) nach einem der vorhergehenden Ansprüche,
**dadurch gekennzeichnet, dass**
der Kamerachip (12) eine Mehrzahl an Pixel umfasst, wobei ein Pixel unabhängig und/oder zeitlich asynchron von den anderen Pixeln dann die Sensordaten (41) erzeugt, falls eine Helligkeitsänderung größer als ein vorbestimmter Schwellenwert ist.

12. Ereignisbasierte Kamera (10) nach Anspruch 11,
**dadurch gekennzeichnet, dass**
die Pixel des Kamerachips (12) in einer Matrix angeordnet sind.

13. Laserstrahlbearbeitungsanlage (40) umfassend eine ereignisbasierte Kamera (10) nach einem der vorhergehenden Ansprüche zur Überwachung eines Laserstrahlbearbeitungsprozesses.

14. Laserstrahlbearbeitungsanlage (40) nach Anspruch 13,
**dadurch gekennzeichnet, dass**
die Laserstrahlbearbeitungsanlage (40) eine Auswerteeinrichtung (42) umfasst, wobei die Auswerteeinrichtung (42) eingerichtet ist, mittels der von
der ereignisbasierten Kamera (10) erzeugten Sensordaten (41) bei dem Laserstrahlbearbeitungsprozess entstandene Spritzer und/oder Auswürfe zu detektieren.

15. Verwendung einer ereignisbasierten Kamera (10) nach einem der Ansprüche 1 bis 12 zur Überwachung eines Laserstrahlbearbeitungsprozesses, insbesondere zur Überwachung eines Laserstrahlschweißprozesses.

## Claims

1. Event-based camera (10) for generating sensor data (41), in particular for a laser beam processing system (40), comprising a camera chip (12) and a lens (14) for imaging an object (20) in a detection area (24) of the event-based camera (10) onto the camera chip (12),
**characterized in that**
the event-based camera (10) comprises a lighting device (22), wherein the lighting device (22) is configured to illuminate the camera chip (12) with light.

2. Event-based camera (10) according to Claim 1,
**characterized in that**
the lighting device (22) is configured to illuminate the camera chip (12) homogeneously with the light.

3. Event-based camera (10) according to any of the preceding claims,
**characterized in that**
the lighting device (22) is arranged within the lens (14).

4. Event-based camera (10) according to any of the preceding claims,
**characterized in that**
the lighting device (22) is configured to emit the light diffusely into the lens (14) and/or **in that** the event-based camera (10) comprises a diffuser (32).

5. Event-based camera (10) according to any of the preceding claims, **characterized in that**
the lighting device (22) is in the form of a point light source and/or a ringshaped light source.

6. Event-based camera (10) according to Claim 1 or 2 or according to Claim 4 or 5 if not dependent on Claim 3,
**characterized in that**
the lens (14) comprises a beam splitter (30), and the beam splitter (30) is arranged on an optical axis (28) of the event-based camera (10), wherein the lighting device (22) is arranged outside the lens (14) such that the lighting device (22) illuminates the camera chip (12) with the light via the beam splitter (30).

7. Event-based camera (10) according to Claim 6 if dependent on Claim 4,
**characterized in that**
the diffuser (32) is arranged between the lighting device (22) and the beam splitter (30).

8. Event-based camera (10) according to Claim 1, 2, 6 or 7 or according to Claim 4 or 5 if not dependent on Claim 3,
**characterized in that**
the lighting device (22) is arranged outside the lens (14) of the event-based camera (10) in the detection area (24) of the event-based camera (10) such that the light emitted by the lighting device (22) substantially illuminates only the camera chip (12).

9. Event-based camera (10) according to Claim 8,
**characterized in that**
a shielding device (34) is arranged between the lighting device (22) and the imaged object (20) such that the object (20) is shielded from the light emitted by the lighting device (22).

10. Event-based camera (10) according to any of the preceding claims, **characterized in that**
the event-based camera (10) comprises an optical filter (18), wherein the optical filter (18) is arranged in a beam path (26) of the event-based camera (10), in particular in the lens (14), and/or wherein a transmission wavelength of the optical filter (18) is substantially equal to an emission wavelength of the light emitted by the lighting device (22).

11. Event-based camera (10) according to any of the preceding claims,
**characterized in that**
the camera chip (12) comprises a plurality of pixels, wherein a pixel generates the sensor data (41) independently of and/or temporally asynchronously with respect to the other pixels should a change in brightness be greater than a predetermined threshold value.

12. Event-based camera (10) according to Claim 11,
**characterized in that**
the pixels of the camera chip (12) are arranged in a matrix.

13. Laser beam processing system (40) comprising an event-based camera (10) according to one of the preceding claims for monitoring a laser beam processing process.

14. Laser beam processing system (40) according to Claim 13,
**characterized in that**
the laser beam processing system (40) comprises an evaluation device (42), wherein the evaluation device (42) is configured to detect spatter and/or ejecta resulting from the laser beam processing process by means of the sensor data (41) generated by the event-based camera (10).

15. Use of an event-based camera (10) according to any of Claims 1 to 12 for monitoring a laser beam processing process, in particular for monitoring a laser beam welding process.

## Revendications

1. Caméra basée sur un événement (10) pour générer des données de capteur (41), en particulier pour un système de traitement par faisceau laser (40), comprenant une puce de caméra (12) et un objectif (14) pour imager un objet (12) sur la puce de caméra (20) dans une zone de capture (24) de la caméra basée sur un événement (10),
**caractérisée en ce que**
la caméra basée sur un événement (10) comprend un dispositif d'éclairage (22), le dispositif d'éclairage (22) étant conçu pour éclairer la puce de caméra (12) avec de la lumière.

2. Caméra basée sur un événement (10) selon la revendication 1,
**caractérisée en ce que**
le dispositif d'éclairage (22) est conçu pour éclairer la puce de caméra (12) de manière homogène avec la lumière.

3. Caméra basée sur un événement (10) selon l'une quelconque des revendications précédentes,
**caractérisée en ce que**
le dispositif d'éclairage (22) est disposé à l'intérieur de l'objectif (14).

4. Caméra basée sur un événement (10) selon l'une quelconque des revendications précédentes,
**caractérisée en ce que**
le dispositif d'éclairage (22) est conçu pour émettre la lumière de manière diffuse dans l'objectif (14) et/ou **en ce que** la caméra basée sur un événement (10) comprend un diffuseur (32).

5. Caméra basée sur un événement (10) selon l'une quelconque des revendications précédentes, **caractérisée en ce que**
le dispositif d'éclairage (22) est réalisé sous la forme d'une source lumineuse ponctuelle et/ou d'une source lumineuse annulaire.

6. Caméra basée sur un événement (10) selon la revendication 1 ou 2 ou selon la revendication 4 ou 5 si elle ne dépend pas de la revendication 3,
**caractérisée en ce que**
l'objectif (14) comprend un diviseur de faisceau (30) et le diviseur de faisceau (30) est disposé sur un axe optique (28) de la caméra basée sur un événement (22), le dispositif d'éclairage (22) étant disposé à l'extérieur de l'objectif (30) de telle sorte que le dispositif d'éclairage (10) éclaire la puce de caméra (12) avec la lumière par l'intermédiaire du diviseur de faisceau (14).

7. Caméra basée sur un événement (10) selon la revendication 6 si elle dépend de la revendication 4,
**caractérisée en ce que**
le diffuseur (32) est disposé entre le dispositif d'éclairage (22) et le diviseur de faisceau (30).

8. Caméra basée sur un événement (10) selon la revendication 1, 2, 6 ou 7 ou selon la revendication 4 ou 5 si elle ne dépend pas de la revendication 3,
**caractérisée en ce que**
le dispositif d'éclairage (22) est disposé à l'extérieur de l'objectif (14) de la caméra basée sur un événement (10) dans la zone de capture (24) de la caméra basée sur un événement (10) de telle sorte que la lumière émise par le dispositif d'éclairage (22) éclaire sensiblement exclusivement la puce de caméra (12).

9. Caméra basée sur un événement (10) selon la revendication 8,
**caractérisée en ce que**
un dispositif de protection (34) est disposé entre le dispositif d'éclairage (22) et l'objet imagé (20) de telle sorte que l'objet (20) est protégé de la lumière émise par le dispositif d'éclairage (22).

10. Caméra basée sur un événement (10) selon l'une quelconque des revendications précédentes, **caractérisée en ce que**
la caméra basée sur un événement (10) comprend un filtre optique (18), le filtre optique (18) étant disposé dans un trajet de faisceau (26) de la caméra basée sur un événement (10), en particulier dans l'objectif (14), et/ou une longueur d'onde de transmission du filtre optique (18) étant sensiblement égale à une longueur d'onde d'émission de la lumière émise par le dispositif d'éclairage (22).

11. Caméra basée sur un événement (10) selon l'une quelconque des revendications précédentes,
**caractérisée en ce que**
la puce de caméra (12) comprend une pluralité de pixels, un pixel générant les données de capteur (41) de manière indépendante et/ou temporellement asynchrone par rapport aux autres pixels si un changement de luminosité est supérieur à une valeur seuil prédéterminée.

12. Caméra basée sur un événement (10) selon la revendication 11,
**caractérisée en ce que**
les pixels de la puce de caméra (12) sont agencés en une matrice.

13. Système de traitement par faisceau laser (40) comprenant une caméra basée sur un événement (10) selon l'une quelconque des revendications précédentes pour surveiller un processus de traitement par faisceau laser.

14. Système de traitement par faisceau laser (40) selon la revendication 13,
**caractérisée en ce que**
le système de traitement par faisceau laser (40) comprend un dispositif d'évaluation (42), le dispositif d'évaluation (42) étant conçu pour détecter des éclaboussures et/ou des éjections apparues pendant le traitement par faisceau laser au moyen des données de détection (41) générées par la caméra basée sur un événement (10).

15. Utilisation d'une caméra basée sur un événement (10) selon l'une quelconque des revendications 1 à 12 pour la surveillance d'un processus de traitement par faisceau laser, en particulier pour la surveillance d'un processus de soudage par faisceau laser.
